# EUROPEAN PATENT SPECIFICATION

(11) **EP 3 183 102 B1**
(45) Date of publication and mention of the grant of the patent: **13.11.2019**
(21) Application number: 15750766.6
(22) Date of filing: 18.08.2015
(51) Int. Cl.: B29C 33/30, B29C 33/38, B29L 31/08

(54) **A METHOD OF MANUFACTURING A MOULD FOR A WIND TURBINE BLADE SHELL**
VERFAHREN ZUR HERSTELLUNG EINER FORM FÜR EINE WINDTURBINENSCHAUFELHÜLLE
PROCÉDÉ DE FABRICATION D'UN MOULE POUR UNE COQUE DE PALE D'ÉOLIENNE

(30) Priority: 19.08.2014 EP 14181425; 28.08.2014 GB 201415217
(43) Date of publication of application: 28.06.2017
(73) Proprietor: LM WP Patent Holding A/S, 6000 Kolding (DK)
(72) Inventor: DE WAAL MALEFIJT, Bernard Willem, DK-6200 Aabenraa (DK); WOLF, Ulrik, DK-6000 Kolding (DK); KIRKEGAARD, Daniel Schlichting, DK-7000 Fredericia (DK)
(74) Representative: COPA Copenhagen Patents
(86) International application number: PCT/EP2015/068966
(87) International publication number: WO 2016/026867

(56) References cited:
- WO-A1-2013/153413
- DE-C1- 19 900 950
- DE-U1-202014 000 999

## Description

### Field of the Invention

The present invention relates to a system and method for the manufacture of equipment for use in the manufacture of wind turbine blades, in particular a wind turbine blade mould or a plug for a wind turbine blade mould.

### Background of the Invention

Wind turbines are the prime example of renewable power generation technology which is in a state of continuous global deployment. Due to increased difficulties in transport and/or increased local content requirements, wind turbine manufacture continues to experience a drive towards localised manufacture and assembly. One such trend is in the area of "pop-up" factories, characterised by a relatively quick, low-cost ramp-up from zero to full-scale production. Such factories rely on the use of low-cost equipment, which can be deployed in a short timeframe to facilitate the fast start-up time of such a facility.

One of the challenges to the use of such "pop-up" factories is the provision of high-quality wind turbine blade moulds and/or associated mould plugs. Such manufacturing equipment often requires time-consuming, high-accuracy tooling. Furthermore, common blade manufacturing systems require that such blade mould be hinged, to allow for the turning and closing of blade shells to form a wind turbine blade. PCT publication number WO2013113815 describes a wind turbine blade manufacturing system having stationary moulds, which reduces the cost involved in setup of a blade manufacturing facility. However, the provision of high-quality moulding surfaces continues to require the use of accurate blade mould plugs and subsequent moulds to produce blade shells of acceptable standards. Such mould plugs and/or moulds can require expensive and time-consuming production techniques and materials. For example, the production of a single blade mould for a wind turbine blade may require a manufacturing time of 4-5 months from initial order to installation on a factory floor.

DE 20 2014 000999 U1 discloses a mould for manufacturing wind turbine blade shells of different sizes and shaped. The mould comprises an upwardly facing recess in which interchangeable mould sections may be arranged to as to form a negative mould for manufacturing a wind turbine blade shell.

It is an object of the invention to provide a system and method for the manufacture of wind turbine blade manufacturing equipment which combines relative low-cost with high speed production systems.

### Summary of the Invention

Accordingly, there is provided a method of manufacturing a mould for a wind turbine blade shell, wherein the method comprises the steps of:
providing a wind turbine blade mould geometry;
dividing said wind turbine blade mould geometry into a plurality of separate geometrical slices;
providing a plurality of mould blank elements, wherein said plurality of mould blank elements corresponds with said plurality of separate geometrical slices;
cutting said plurality of mould blank elements to form a plurality of cut mould elements having cut surfaces, wherein said cutting is based on said plurality of separate geometrical slices; and
assembling said plurality of cut mould elements, wherein the cut surfaces of said cut mould elements substantially form a consolidated wind turbine blade mould surface.

By cutting a mould geometry from a plurality of blanks, a wind turbine blade mould can be manufactured in a relatively quick and efficient manner, allowing for ease of automation of the cutting and/or assembly processes. In addition, the manufacturing process can be relatively easily adapted for differences in mould scale or geometry, with relatively minor adjustment of supply chain dynamics. The use of such a low-cost, high-speed manufacturing technique can result in a manufacturing time of the order of 2-3 weeks for the construction of a new blade mould, compared to prior art systems requiring several months' construction time.

The term "spanwise direction" will be understood to refer to the longitudinal direction extending between the tip end and the root end of a wind turbine blade or a wind turbine blade mould, or an associated geometry. The term "chordwise direction" will be understood to refer to the lateral or transverse direction of such a wind turbine blade or wind turbine blade mould or an associated geometry, the chordwise direction extending between a leading edge and a trailing edge of a wind turbine blade or mould.

According to the invention, the method further comprises the step of applying a coating to said plurality of cut surfaces. Preferably, said step of applying a coating is performed after said step of assembling.

In one aspect, said step of applying a coating acts to provide a resilient mould surface. In an additional or alternative aspect, said step of applying a coating acts to substantially adhere said plurality of cut mould elements to each other. Furthermore, the step of applying a coating may act to smoothen or mask relatively minor imperfections or discontinuities in the consolidated wind turbine blade mould surface.

Preferably, said step of cutting is performed using a robotic cutting member, preferably a CNC cutting apparatus and/or a robotic articulated manipulator arm. In one aspect, said step of cutting is performed using a hot-wire cutting member.

Preferably, the method further comprises the steps of smoothing said consolidated wind turbine blade mould surface. The smoothing may comprise a further cutting, grinding, or polishing operation. It will be understood that said step of smoothing may be performed on the cut surfaces of the cut mould elements before and/or after a step of applying a coating to the cut surfaces.

If the blanks are formed from a light-weight material which can be easily processed, it may be suitable to perform a smoothing operation directly on the cut surfaces. Additionally or alternatively, the coating material may be formed of a substance allowing for ease of smoothing, e.g. during the application process and/or before curing or hardening of the coating.

Preferably, said step of applying a coating comprises applying an elastomer coating, preferably a polyurea coating.

Providing an elastomer coating results in a resilient mould surface which is resistant to operational wear-and-tear.

According to the invention, said mould blank element is formed from a low-weight material, preferably a foam material. In a preferred aspect, said mould blank element is formed from a polymer material which can include, but is not limited to, polystryrene or expanded polystyrene (EPS). Examples of suitable materials may include Styrofoam™, from The Dow Chemical Company, or Styropor®, from BASF SE.

Preferably, said step of dividing said wind turbine blade mould geometry comprises dividing said geometry into a plurality of spanwise and/or chordwise segments. It will be understood that said plurality of spanwise and/or chordwise segments may comprise segments of varying length and/or width.

Breaking the mould geometry into a number of different segments allows for increased ease of processing of the mould blanks, as the relatively complex curve geometry of the mould surface can be broken into separate, relatively smaller, geometrically simpler, segments.

In a preferred embodiment, said step of dividing comprises:
approximating a curved surface profile of said wind turbine blade mould geometry into a plurality of spanwise surface sections, said plurality of spanwise surface sections arranged in series along the spanwise direction of said wind turbine blade mould geometry.

In one aspect, at least some of said plurality of spanwise surface sections comprise a substantially straight-line profile shape in the spanwise direction of the spanwise surface sections.

Additionally or alternatively, said step of dividing comprises:
approximating a curved surface profile of said wind turbine blade mould geometry into a plurality of chordwise surface sections, said plurality of chordwise surface sections arranged in series along the chordwise direction of said wind turbine blade mould geometry.

In one aspect, at least some of said plurality of chordwise surface sections comprise a substantially straight-line profile shape in the chordwise direction of the chordwise surface sections.

The division of the surface geometry into segments having a straight-line shape in one direction of the segments provides for an approximation of the desired surface geometry which can be re-created using straight-line cutting devices. For example, a hot wire cutter is typically arranged to perform a straight-line cut of a material, which would be suitable for the above process. It will be understood that the step of dividing may comprise a combination of spanwise and chordwise surface sections.

Preferably, at least some of said plurality of spanwise surface sections comprise a curved profile in the chordwise direction of the spanwise surface sections. Similarly, at least some of said plurality of chordwise surface sections may comprise a curved profile in the spanwise direction of the chordwise surface sections

While the segments may be substantially straight in a first spanwise or chordwise direction, the second chordwise or spanwise direction of the segments may be curved, wherein the curve may be recreated by controlling the depth of the cut made by a straight-line cutting device.

In an alternative embodiment, said step of dividing comprises:
approximating a curved surface profile of said wind turbine blade mould geometry into a plurality of planar surfaces, and
associating said plurality of planar surfaces with said plurality of spanwise and/or chordwise segments.

In one aspect, each of said plurality of spanwise and/or chordwise segments may comprise a single one of said plurality of planar surfaces. In an alternative aspect, each of said plurality of spanwise and/or chordwise segments may comprise a number of said plurality of planar surfaces.

While it will be understood that the cut surfaces of said cut mould elements may comprise a single, substantially planar surface, it will also be understood that the cut surfaces of each of said cut mould elements may comprise a number of differently-oriented planar surfaces, to form an approximated geometrical slice of the wind turbine blade mould geometry.

Furthermore, while the cut surfaces may be provided as straight-line or planar in one or both of the spanwise and chordwise directions of a segment, it will be understood that the cut surfaces may comprise a degree of twist around a spanwise or chordwise axis of the segment.

As the orientation of a hot-wire cutter may be adjusted during a cutting operation to provide for the cutting of a relatively complex geometry, therefore the cut surface may comprise a degree of twist to more accurately comply with the desired mould geometry.

Preferably, said step of approximating is performed wherein said plurality of surfaces or surface sections follow the curved surface profile within a tolerance margin. Preferably, said tolerance margin is within approximately 10 mm, preferably within approximately 5 mm, further preferably within approximately 1 mm.

The mould blank elements may comprise a plane lower surface, and an upper surface corresponding to a part of the consolidated wind turbine blade mould surface. The mould blank elements may in a top view have a rectangular outline.

There is further provided a wind turbine blade mould manufactured according to any aspect of the above method.

There is also provided a method of manufacturing a mould plug for a wind turbine blade shell, wherein the method comprises the steps of:
providing a wind turbine blade mould plug geometry;
dividing said wind turbine blade mould plug geometry into a plurality of separate geometrical slices;
providing a plurality of plug blank elements, wherein said plurality of plug blank elements corresponds with said plurality of separate geometrical slices;
cutting said plurality of plug blank elements to form a plurality of cut plug elements having cut surfaces, wherein said cutting is based on said plurality of separate geometrical slices; and
assembling said plurality of cut plug elements, wherein the cut surfaces of said cut plug elements substantially form a consolidated wind turbine blade mould plug surface.

Similar to the mould blank elements, the plug blank elements are also made of a low-weight material, such as a foamed polymer, and are further coated with a resilient coating, such as an elastomer coating, e.g. a polyuria coating.

There is also provided a method of manufacturing at least a portion of a wind turbine blade mould or a wind turbine blade mould plug, the method comprising the steps of:
providing a blade mould or blade mould plug template geometry to define at least a portion of a wind turbine blade mould or a wind turbine blade mould plug;
providing at least one mould blank element;
providing a flexible cutting device; and
cutting said at least one mould blank element using said flexible cutting device to form at least one cut mould element having a cut surface, said cut surface forming at least a portion of a wind turbine blade mould or a wind turbine blade mould plug, wherein the method further comprises:
   reshaping said flexible cutting device based on said template geometry, such that said flexible cutting device is arranged to cut said at least one mould blank element according to said template geometry.

It will be understood that a plurality of mould blank elements may be provided, wherein each of said mould blank elements may be cut to have cut surfaces with different surface profiles. The different surface profiles may correspond to different portions of the template geometry. It will be further understood that the template geometry may comprise a series of curved surface portions, wherein said reshaping is performed such that the flexible cutting device is shaped to substantially correspond with the curved surface portions of the template geometry.

In one aspect, said step of reshaping is performed prior to said cutting step. This may be performed by bending the cutting device to assume the desired profile. In an additional or alternative aspect, said step of reshaping may be performed dynamically during said step of cutting. The cutting device may be provided with adjustable components, e.g. piezoelectric actuator devices, to adjust the profile of the cutting device before or during a cutting operation.

Preferably, said flexible cutting device comprises a hot wire cutting device. Such a device is generally provided as a relatively thin, taut metal wire, formed from a metallic material, e.g. nichrome or stainless steel. The wire is heated via electrical resistance to approximately 200°C, wherein the heat of the wire acts to cut through the material by burning or vaporisation of the material. Such a cutting device is suitable for cutting of polystyrene and similar foam materials.

Preferably, said step of reshaping comprises:
defining a desired cut surface profile for said at least one cut mould element based on said template geometry; and
reshaping said flexible cutting device to correspond with said desired cut surface profile.

Preferably, the step of reshaping comprises:
providing at least one flexible bearing surface;
adjusting the shape of the at least one flexible bearing surface based on said template geometry; and
pressing the flexible cutting device against said at least one flexible bearing surface such that the flexible cutting device assumes the shape of the at least one flexible bearing surface.

Preferably, the method comprises providing first and second opposed flexible bearing surfaces, wherein the first and second opposed flexible bearing surfaces form a flexible clamping apparatus used to reshape the flexible cutting device.

By providing for a shaped cutting profile as opposed to a planar cut, accordingly the different sections or slices of the cutting are not as limited with regards to a tolerance margin of the planar surface approximation to the actual curved geometry. As a result, the entire mould geometry may be approximated using a smaller number of geometrical slices.

There is also provided an apparatus for shaping a flexible cutting device comprising:
at least one flexible bearing surface, wherein the apparatus is operable to shape said at least one flexible bearing surface,
wherein the opposed side of said at least one flexible bearing surface is arranged to bear against a flexible cutting device, such that the flexible cutting device assumes the shape of the at least one flexible bearing surface.

Preferably, the apparatus comprises an array of actuators acting on a first side of said at least one flexible bearing surface, said array of actuators operable to shape said at least one flexible bearing surface. Preferably, the apparatus comprises an array of linear actuators.

Preferably, the apparatus comprises first and second flexible bearing surfaces arranged opposite each other, such that said first and second bearing surfaces are operable to form complimentarily-shaped bearing surfaces, the flexible cutting device to be received between said first and second bearing surfaces.

Preferably, the at least one flexible bearing surface is formed from a flexible material, e.g. a rubber material.

In one aspect, a receiving channel may be defined in said at least one flexible bearing surface, wherein the receiving channel is arranged to receive at least a portion of a flexible cutting device.

Preferably, the apparatus further comprises a controller operable to adjust said at least one flexible bearing surface, wherein said controller is arranged to receive a template geometry, said controller arranged to adjust said at least one flexible bearing surface to correspond to at least a portion of the received template geometry.

In a preferred aspect, the template geometry comprises at least a portion of a template geometry for a wind turbine blade mould or a wind turbine blade mould plug.

While aspects of the invention may be described above in terms of features for the manufacture of a wind turbine blade mould, it will be understood that any of the above features may also apply to the manufacture of a wind turbine mould plug.

There is further provided a mould plug for a wind turbine blade mould manufactured according to any aspect of the above method.

### Description of the Invention

Embodiments of the invention will now be described, by way of example only, with reference to the accompanying drawings, in which:
Fig. 1 shows a wind turbine;
Fig. 2 shows a schematic view of a wind turbine blade;
Fig. 3 shows a schematic view of an airfoil profile of the blade of Fig. 2;
Fig. 4 shows a schematic view of the wind turbine blade of Fig. 2, seen from above and from the side;
Fig. 5 illustrates a process diagram for a method of manufacturing a wind turbine blade mould according to an aspect of the invention;
Fig. 6 shows a sample blade mould geometry for use in the method of Fig. 5;
Fig. 7 illustrates an example division of the blade mould geometry of Fig. 6;
Fig. 8 illustrates a spanwise cross-sectional view of the division of the mould geometry of Fig. 7;
Fig. 9 illustrates a sample cutting apparatus and mould blank element for use in the method of Fig. 5;
Fig. 10 illustrates a first cut mould element produced by the cutting apparatus of Fig. 9;
Fig. 11 illustrates a second cut mould element produced by the cutting apparatus of Fig. 9;
Fig. 12 illustrates a first wind turbine blade mould manufactured according to an embodiment of the method of Fig. 5;
Fig. 13 illustrates an alternative example division of the blade mould geometry of Fig. 6;
Fig. 14 illustrates a transverse cross-sectional view of a spanwise segment of the mould geometry of Fig. 13;
Fig. 15 illustrates a second wind turbine blade mould manufactured according to an embodiment of the method of Fig. 5;
Fig. 16 illustrates a further alternative example division of the blade mould geometry of Fig. 6;
Fig. 17 illustrates a third wind turbine blade mould manufactured according to an embodiment of the method of Fig. 5;
Fig. 18 illustrates a process diagram for a portion of a method of manufacturing a wind turbine blade mould according to another aspect of the invention;
Fig. 19 illustrates an apparatus for the re-shaping of a cutting device for use with the method of Fig. 18; and
Fig. 20 illustrates a spanwise cross-sectional view of a division of a mould geometry using the method of Fig. 18.

It will be understood that elements common to the different embodiments of the invention have been provided with the same reference numerals in the drawings. In addition, it will be understood that the drawings are for illustrative purposes, and are not provided to scale.

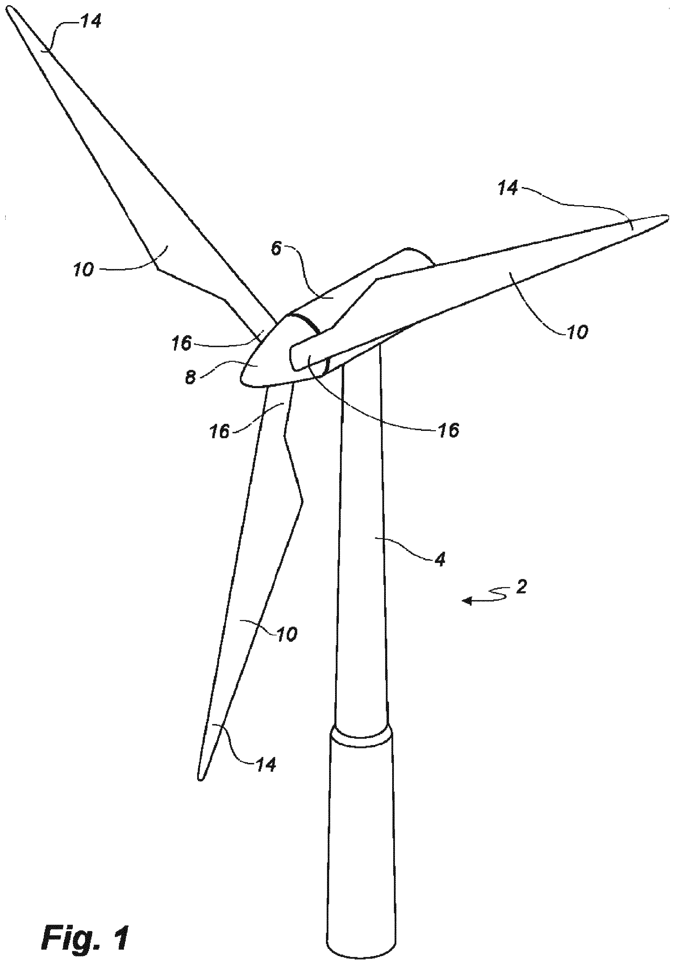

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

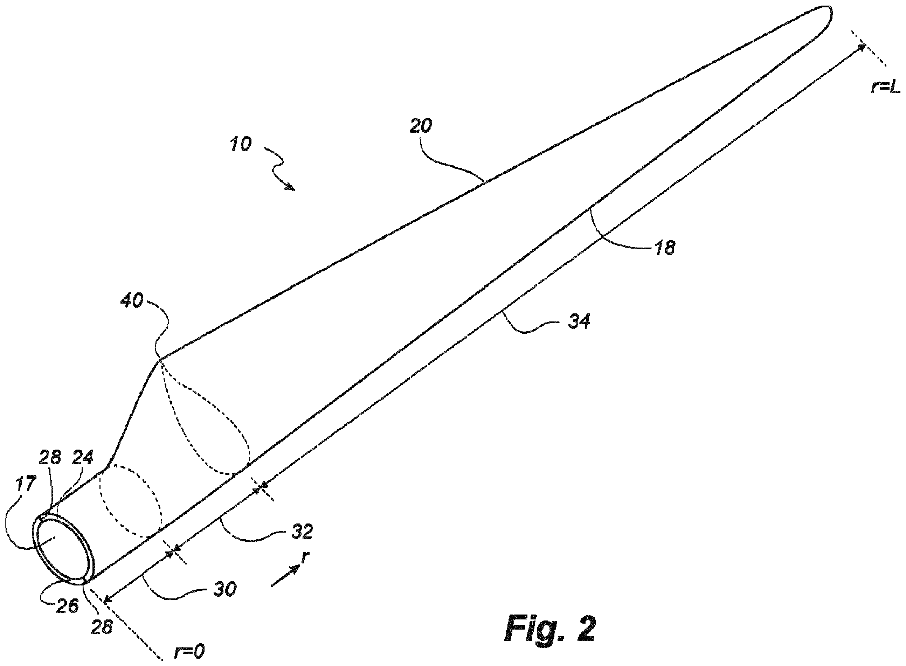

Fig. 2 shows a schematic view of a wind turbine blade 10. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape 40 of the root region 30 to the airfoil profile 50 of the airfoil region 34. The chord length of the transition region 32 typically increases substantially linearly with increasing distance *r* from the hub.

The airfoil region 34 has an airfoil profile 50 with a chord extending between the leading edge 18 and the trailing edge 20 of the blade 10. The width of the chord decreases with increasing distance *r* from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

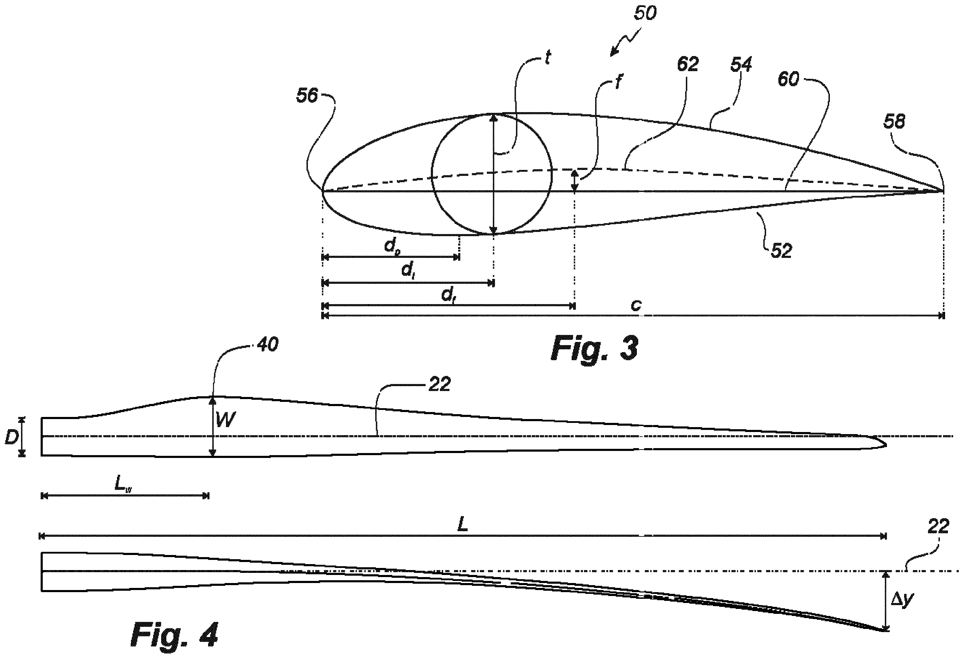

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber *f,* the position *d_{f}* of the maximum camber *f,* the maximum airfoil thickness *t,* which is the largest diameter of the inscribed circles along the median camber line 62, the position *dₜ* of the maximum thickness *t,* and a nose radius (not shown). These parameters are typically defined as ratios to the chord length *c.* Thus, a local relative blade thickness *t*/*c* is given as the ratio between the local maximum thickness *t* and the local chord length *c.* Further, the position *dₚ* of the maximum pressure side camber may be used as a design parameter, and of course also the position of the maximum suction side camber.

Fig. 4 shows some other geometric parameters of the blade. The blade has a total blade length *L.* As shown in Fig. 2, the root end is located at position *r* = 0, and the tip end located at *r* = *L.* The shoulder 40 of the blade is located at a position *r* = *L_{w},* and has a shoulder width *W,* which equals the chord length at the shoulder 40. The diameter of the root is defined as *D.* Further, the blade is provided with a prebend, which is defined as *Δy*, which corresponds to the out of plane deflection from a pitch axis 22 of the blade.

The wind turbine blade 10 generally comprises a shell made of fibre-reinforced polymer, and is typically made as a pressure side or upwind shell part 24 and a suction side or downwind shell part 26 that are glued together along bond lines 28 extending along the trailing edge 20 and the leading edge 18 of the blade 10. Wind turbine blades are generally formed from fibre-reinforced plastics material, e.g. glass fibres and/or carbon fibres which are arranged in a mould and cured with a resin to form a solid structure. Wind turbine blades are generally formed as two half-shells in separate blade shell moulds which are subsequently joined together to form a consolidated wind turbine blade. It will be understood that the terms "blade mould" and "blade shell mould" may be used interchangeably in this specification.

Modern wind turbine blades can often be in excess of 30 or 40 metres in length, having blade root diameters of several metres. Wind turbine blades are generally designed for relatively long lifetimes and to withstand considerable structural and dynamic loading.

The wind turbine blade may preferably be manufactured using a two-stage manufacturing system, wherein wind turbine blade shells can be formed in a simple blade mould before being transferred to a post-moulding cradle for closing and finishing. Such a system is described in PCT publication number WO2013113815, the contents of which are incorporated by reference herein.

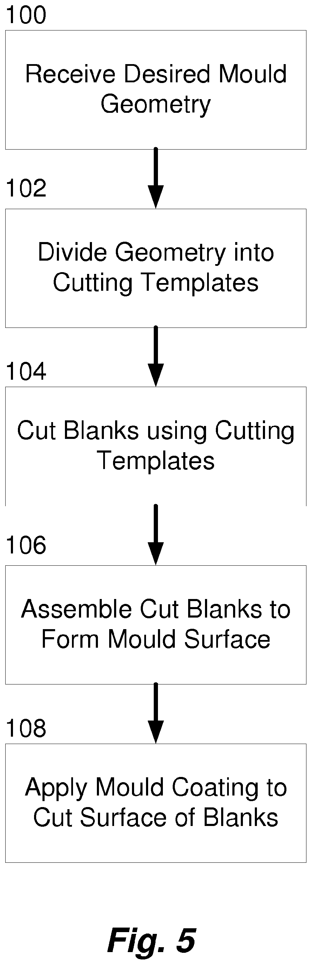

In an effort to provide for a low-cost, high-speed manufacturing method for a wind turbine blade mould, the invention provides for a system wherein a wind turbine blade mould is manufactured from a plurality of blank elements which can be cut to form portions of the blade mould. A process diagram for an embodiment of the invention is illustrated in Fig. 5.

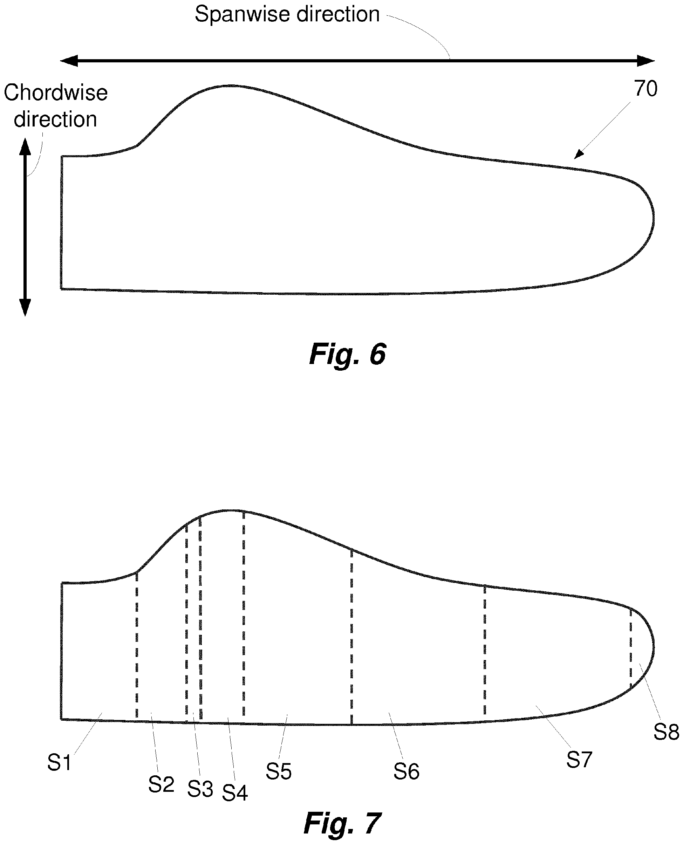

Initially, a desired wind turbine blade mould geometry is provided in step 100. The geometry may define a plurality of different characterising features for the desired wind turbine blade mould, e.g. spanwise length, chordwise length, depth, bolt circle diameter, desired airfoil profile, etc. An example desired mould geometry is illustrated at 70, Fig. 6.

In one aspect, the mould geometry may comprise a plurality of mould surface cross-sections, defining the shape of the mould for a plurality of transverse cross-sections of the mould. The consolidated mould geometry may be interpolated by a smoothing function applied between said plurality of mould surface cross-sections. Additionally or alternatively, the mould geometry may comprise a point cloud of a number of points defined in a three-dimensional space, wherein the point cloud defines the surface profile geometry of the blade mould.

It will be understood that the mould geometry may be provided as a software file or computer code which may be stored on a computer-readable storage medium. The mould geometry may be generated as part of the method of the invention, or the system may be arranged to receive a mould geometry, e.g. in the form of a computer-readable file or set of instructions.

It will be understood that the mould geometry may be produced based on a newly-designed wind turbine blade geometry, wherein the wind turbine blade mould is a new mould design. Alternatively, the mould geometry may be produced based on an appropriate scanning or other sampling of an existing wind turbine blade mould, wherein it is desired to replicate the existing wind turbine blade mould.

Once the desired mould geometry is received, further processing of the mould geometry data is performed, to provide a plurality of cutting templates, step 102, which may be used as an input for a cutting apparatus. In a first aspect, the mould geometry is divided into a plurality of separate geometrical slices.

With reference to Fig. 7, the provided mould geometry 70 is divided into a plurality of sequential spanwise segments, indicated as segments S1-S8 in Fig. 7. The dimensions of the segments S1-S8 are selected such that each of the segments have a substantially straight-line profile shape in the spanwise direction of the segments, while providing a relatively accurate approximation of the surface geometry of the mould 70.

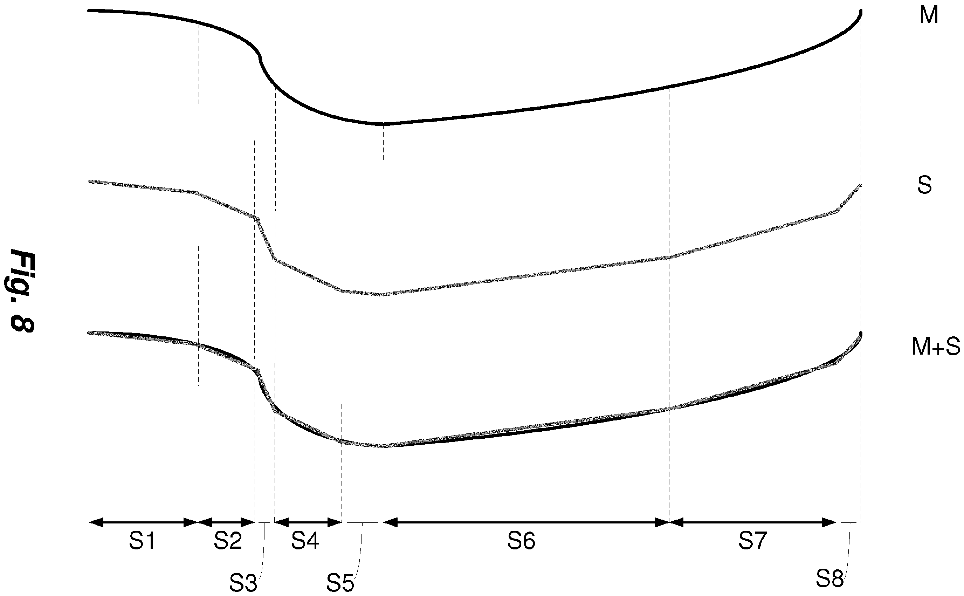

With reference to Fig. 8, a cross-sectional profile of the segments of Fig. 7 is shown, taken along the longitudinal or spanwise axis of the mould geometry 70. The mould geometry 70 is illustrated at the plot M, the segments are indicated at the plot S showing the substantially planar or straight-line spanwise projection of the segments, with the mould geometry and the segments superimposed in the plot M+S. The segments S1-S8 are selected to follow the curvature of the mould surface, such that the error margin between the substantially planar spanwise direction of the segments S1-S8 and the actual mould geometry surface for that section of the segment is maintained below a threshold value, e.g. using a bet-fit algorithm.

Preferably, the segments are selected such that the spanwise planar or straight-line surface defined by the sections follows the curved surface profile within a tolerance margin. Preferably, said tolerance margin is within approximately 10 mm, preferably within approximately 5 mm, further preferably within approximately 1 mm.

It will be understood that the particular dimensions of the spanwise segments S1-S8 may vary based on the particular mould geometry used. For example, if the mould geometry is relatively straight and unchanging in the spanwise direction, the length of the individual spanwise segments may be relatively long in the spanwise direction while still satisfying best-fit conditions. By contrast, for a pre-bent wind turbine blade, the mould geometry may have a large pre-bend in the spanwise direction, which may require a relatively large number of spanwise segments to accurately follow the pre-bend curvature of the mould geometry. In the example shown in Fig. 8, it can be seen that a relatively large number of segments may be used to approximate a relatively small spanwise distance in regions of relatively high spanwise curvature.

Similarly, a mould geometry having relatively shallow camber or curvature may require a lower number of spanwise segments, as the mould geometry may be approximated within acceptable best-fit threshold margins using a smaller number of segments or sections than a mould geometry having a relatively more complex curvature or mould shape.

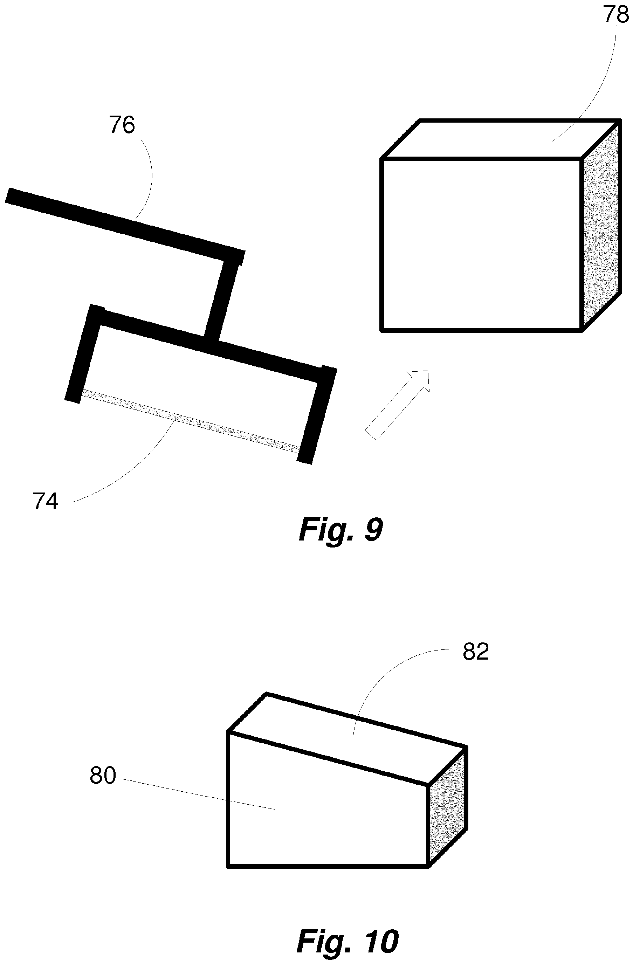

The spanwise segments define cutting templates for a cutting apparatus, such that an approximation of a mould surface geometry profile may be cut or machined from a cutting blank element, step 104. The spanwise segments are preferably formed by a cut made in a surface of a blank element, the cut performed in a direction corresponding to a chordwise direction. With reference to Fig. 9, a preferred embodiment of a cutting system according to the method of the invention is illustrated.

In Fig. 9, a robotic or computer-controlled cutting apparatus in the form of a hot wire cutter is indicated at 74. The hot wire cutter 74 is provided on an articulated arm 76, to allow for the adjustment of the cutting angle provided by the cutter 74. A mould blank element 78 is provided, the mould blank element 78 preferably formed from a light-weight material such as a foam material, preferably formed from a polystyrene or expanded polystyrene (EPS) material. The hot wire cutter 74 is arranged to be passed through the mould blank element 78 to cut a surface into the blank. The orientation of the hot wire cutter 74 is controlled using the cutting templates provided from the approximation of the mould surface geometry profile, such that the surfaces cut into the blanks 78 correspond to the best-fit segments and/or sections of the approximation of the mould surface geometry profile.

The cutting apparatus is passed through the mould blank element 78 to form cut mould elements 80 having a cut surface 82 defined thereon, Fig. 10. While the example of Fig. 10 illustrates a substantially planar cut surface 82, it will be understood that the cutting apparatus may be arranged to provide curved surfaces, such as in the chordwise direction of the spanwise segments S1-S8.

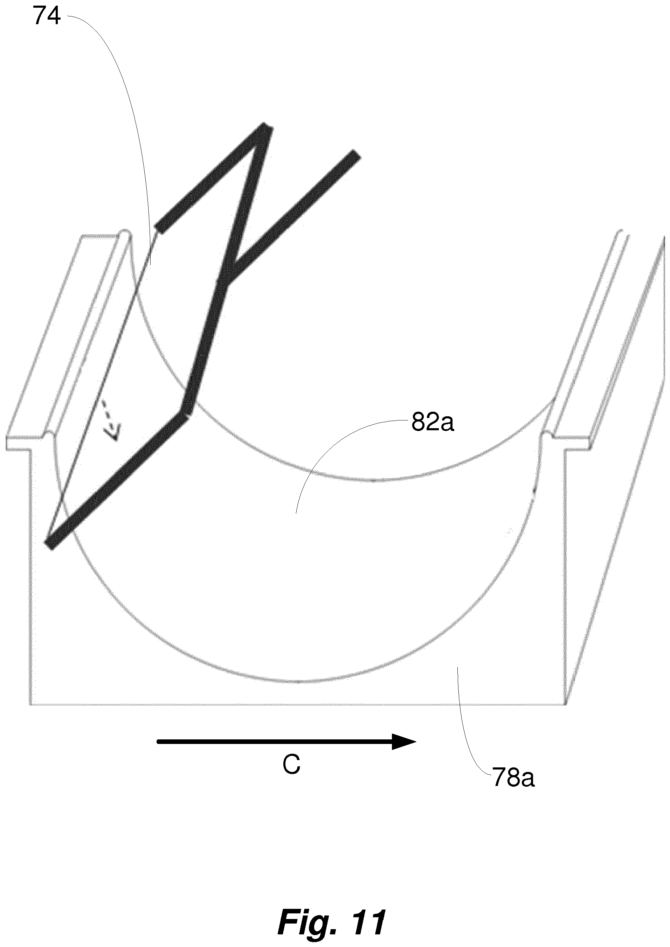

With reference to Fig. 11, a hot wire cutter 74 is shown forming a curved cut surface 82a from a mould blank element 78a. In this example, the hot wire cutter 74 performs a substantially straight-line cut across the length of the cutter itself, which corresponds with the spanwise direction of the mould geometry. The depth of the cut performed by the hot wire cutter 74 into the mould blank element 78a can be varied during cutting, resulting in a curved surface profile in the direction of the cut C, which corresponds with the chordwise direction of the mould geometry.

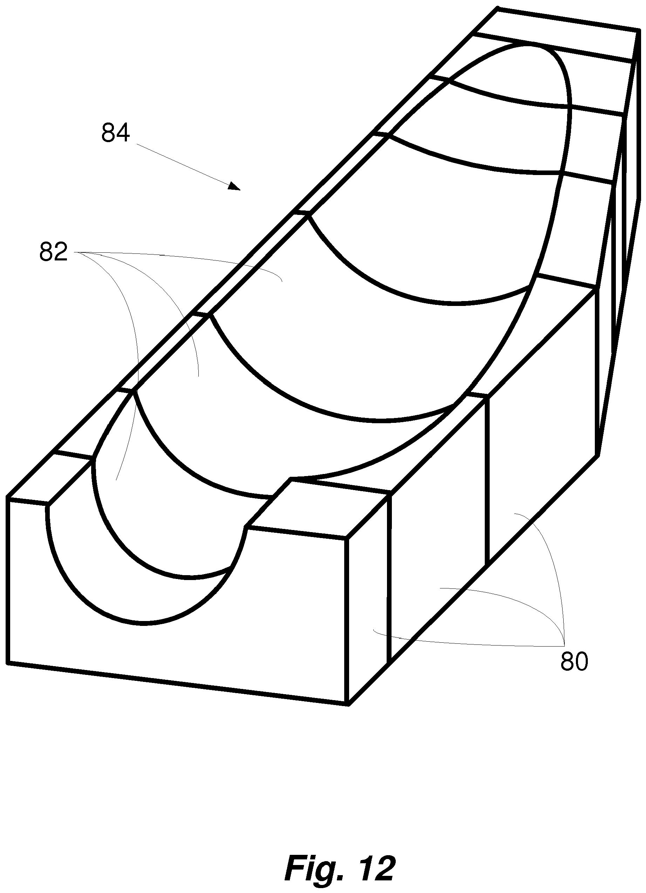

With reference to Fig. 12, separate cut mould elements 80 which have been cut using chordwise cuts based on different spanwise segments can be arranged in sequence such that the cut surfaces 82 of the cut mould elements 80 together define a consolidated wind turbine blade mould surface 84, wherein the consolidated wind turbine blade mould surface substantially corresponds to the desired mould geometry 70.

In a preferred aspect, each spanwise segment S1-S8 may define a cutting template having a plurality of separate cutting orientations and/or cutting depths within the cutting template in the chordwise direction, based on a best-fit orientation calculated for the area within that spanwise segment. In this regard, a single cutting operation may be performed for each spanwise segment of the mould profile, the cutting apparatus making a pass through the blank 78 in a direction corresponding to the chordwise direction of the mould profile. For this configuration, the mould blank elements 78 may be initially provided to match with the number and outline dimensions of the separate spanwise segments S1-S8.

In an alternative aspect, separate cutting templates may be defined by a plurality of chordwise or transverse sections, wherein separate cutting operations are performed for each of the chordwise sections.

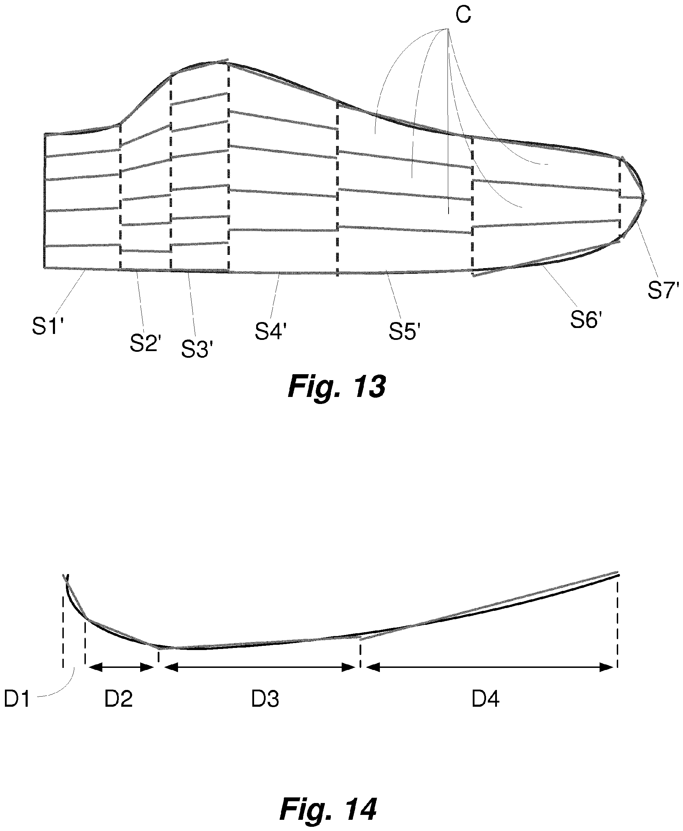

With reference to Fig. 13, the provided mould geometry 70 may be divided into a plurality of sequential spanwise segments, indicated as segments S1'-S7' in Fig. 13. Within the spanwise segments S1'-S7', each of the segments may be further divided into a plurality of chordwise sections, indicated generally at C. The orientation and dimensions of the chordwise sections are selected to closely follow the surface profile of the desired mould geometry 70 for that segment of the mould. In one aspect, the chordwise sections may be arranged as substantially planar sections, but it will be understood that the section may define a degree of curvature or twist in the spanwise and/or chordwise directions.

For this embodiment, the cutting direction of the mould blank elements may be performed in a direction corresponding to the spanwise direction of the mould geometry 70, and/or in a direction corresponding to the chordwise direction of the mould geometry 70.

The use of a spanwise cutting direction may be more effective method of cutting for areas of the blade geometry having relatively complex curvature, e.g. around the areas of max chord and/or in the area of the tip region, where the spanwise profile of the mould geometry varies considerably along the chordwise direction. In such areas, a chordwise straight line cut, e.g. as illustrated in Fig. 11, may not be suitable for a complete chordwise cut of the blade segments, in which case a number of different segments may be required along the chordwise direction of the spanwise segment, to account for changes in the cross-sectional spanwise profile of the segment.

With reference to Fig. 14, the cross-sectional profile of a sample segment is shown, taken in the chordwise direction across a portion of a mould geometry. In this case a plurality of chordwise sections D1-D4 are selected to follow the curvature of the mould surface along the chordwise direction, such that the error margin between the substantially planar chordwise section and the actual mould surface for that section of the segment is maintained below a threshold value, e.g. using a bet-fit algorithm.

For this configuration, the cut surface 82 of each cut mould element 80 may define a single chordwise section of the divided mould geometry, as indicated in the cut mould element 80 shown in Fig. 10. Accordingly, the consolidated mould surface can be formed from a patchwork assembly of each of the individual cut mould elements 80.

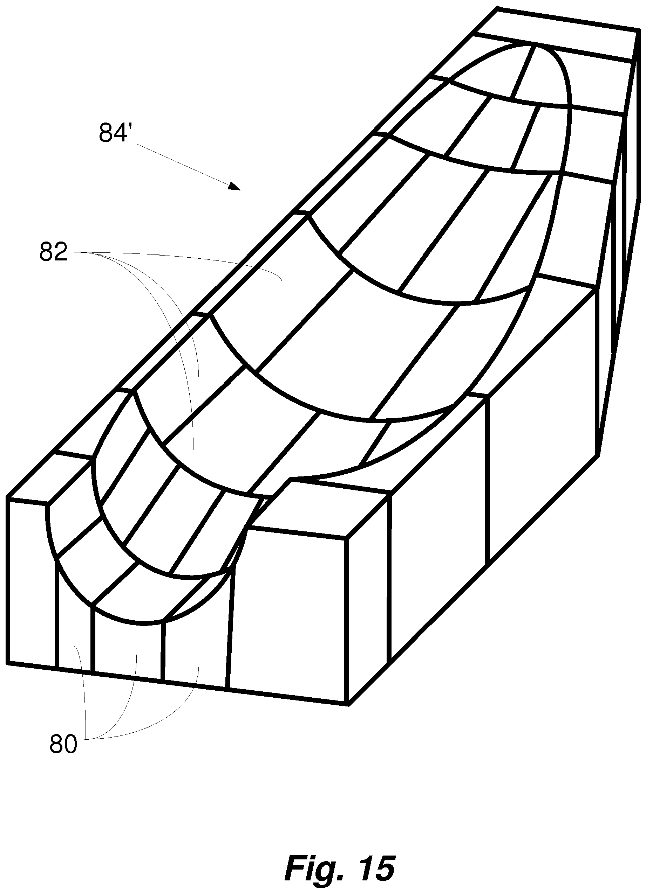

With reference to Fig. 15, separate cut mould elements 80 which have been cut based on different spanwise and chordwise segments can be arranged in sequence such that the cut surfaces 82 of the cut mould elements 80 together define a consolidated wind turbine blade mould surface 84', wherein the consolidated wind turbine blade mould surface substantially corresponds to the desired mould geometry 70.

It will be understood that the cuts may be made in any suitable direction on the mould blank elements relative to the desired mould geometry, e.g. (a) in a spanwise or longitudinal direction, substantially parallel to the longitudinal axis of a wind turbine blade mould between a root end and a tip end of such a mould; (b) in a chordwise or transverse direction, extending between the leading edge and trailing edge of a wind turbine blade mould; or (c) a combination of cuts in both spanwise and chordwise directions.

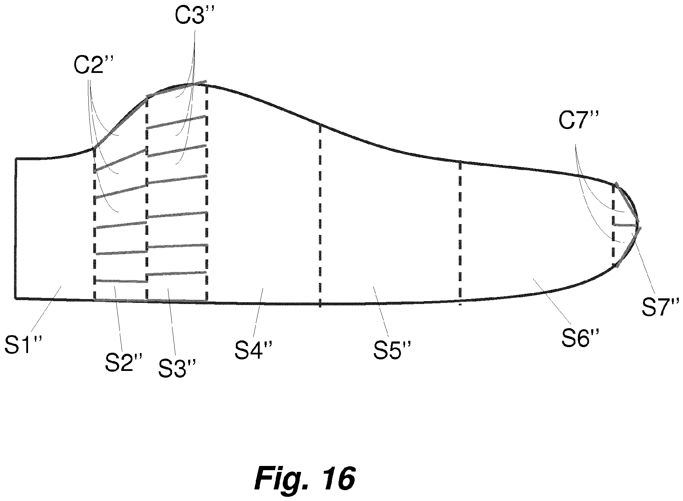

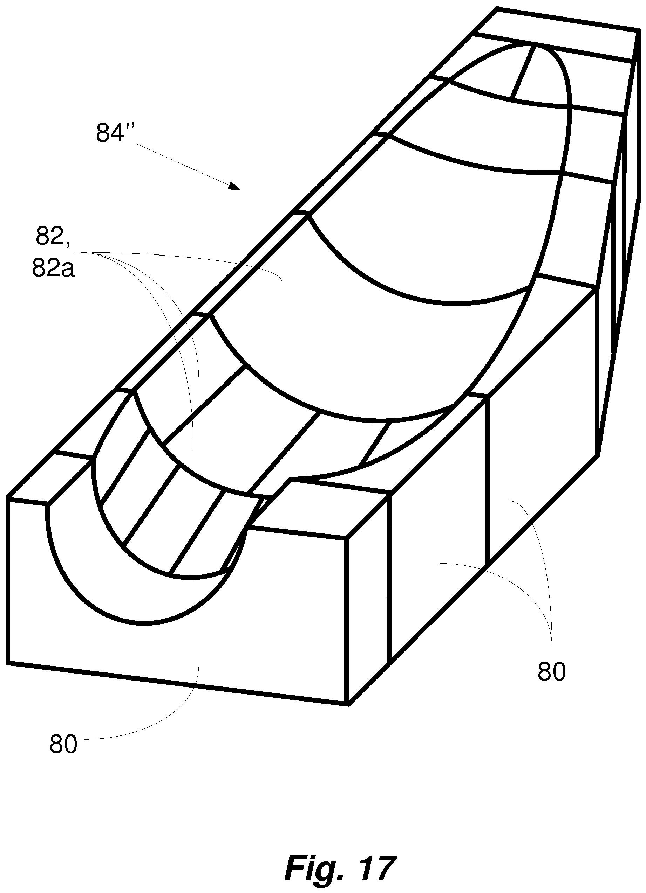

A further embodiment of the method of the invention is illustrated in Figs. 16 and 17.

In Fig. 16, an alternative approach to the division of the mould geometry 70 is shown. In this embodiment, the division results in the provision of a plurality of sequential spanwise segments S1"-S7". In areas of the mould geometry having a relatively unchanging or constant cross-sectional surface profile in the spanwise direction, e.g. the root section S1", the aerodynamic mainboard sections S4"-S6", the segments are preferably formed from a mould blank element using a chordwise cut, as shown in Fig. 11. Such segments may be arranged to use a single mould blank element between the leading edge and the trailing edge of the mould, and/or to have a relatively long length in the spanwise direction.

For areas having a relatively complex or changing curvature along the chordwise direction of the segment, e.g. those segments in the area of max chord S2"-S3", the tip region of the mould S7", the spanwise segments may be further divided into a plurality of sequential chordwise segments, indicated generally as C2", C3", C7". For such chordwise segments, the surface profile may be formed by the cutting of mould blank elements in a spanwise and/or a chordwise cutting direction. As these areas of relatively complex curvature are divided into smaller sections, the mould surface geometry can be more accurately approximated into separate sections for ease of manufacture and assembly.

Fig. 17 illustrates a sample wind turbine blade mould 84" formed from a division of mould geometry similar to Fig. 16. In the mould 84", as described above, those areas of the mould having a steady or relatively constant curvature, such as at the root end of the mould and the mainboard sections of the mould, may be formed from single cut mould elements formed using chordwise cuts of mould blank elements.

Also as described above, areas of the mould having a relatively complex or changing curvature, such as in the transition region, at the area of max chord and at the tip end of the mould, may be formed from a plurality of different chordwise cut mould elements formed using chordwise and/or spanwise cuts of mould blank elements.

While the cut directions are described in the above embodiments as made in a chordwise and/or spanwise direction, it will be understood that the cut direction may be made in a direction generally in line with a chordwise and/or spanwise direction, e.g. within +/- 20 degrees of a spanwise or a chordwise axis at the location of the cut.

It will further be understood that for some areas of the mould geometry, the cut may be performed along a sweeping or curved direction, e.g. from a substantially chordwise direction to a substantially spanwise direction, or vice versa. Such cuts may be appropriate in areas of relatively high curvature, e.g. in the region of the tip end of the mould geometry.

In addition, it will be understood that the start and/or end locations of the cuts may be arranged to define the profile of the leading and/or the trailing edges of that segment of the mould geometry. Such an adjustment of the start and/or end locations may be accomplished through appropriate sweeping or variation of the cut direction for that segment of the mould geometry.

The assembly of the individual cut mould elements 80 may be secured together using any suitable attachment means, e.g. bolting, adhesive, snap-fit connections, etc.

In one aspect, the consolidated profile presented by the assembled cut surfaces 82 may be within tolerance limits and sufficiently accurate to present a finished mould surface. Preferably, however, a coating layer is applied to the consolidated profile, step 108, to present a finished mould surface suitable to receive material for the moulding of a wind turbine blade shell. The coating layer may also act as an adhesive, to bond the separate cut mould elements 80 together to form a consolidated wind turbine blade mould. Preferably, the coating layer comprises an elastomer coating material, preferably a polyurea coating, which can provide a resilient coating resistant to operational wear-and-tear.

A finishing operation may be performed on the assembled cut surfaces of the cut mould elements, and/or on the coating layer applied to the consolidated mould surface. The finishing operation may comprise a further cutting, grinding, and/or polishing operation, to provide for a smooth surface of the finished mould, and to resolve any surface discontinuities between the edges of the assembled cut surfaces.

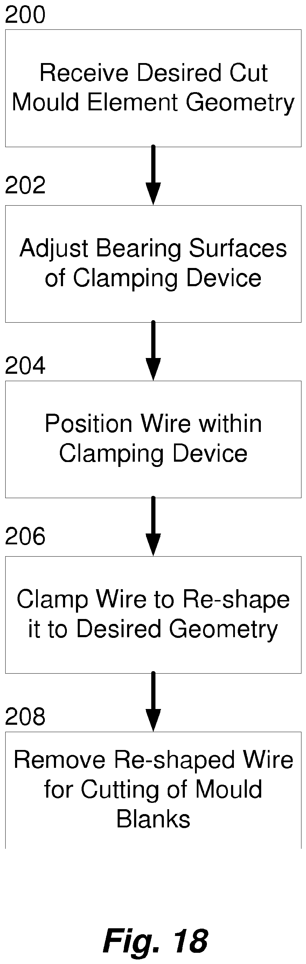

A further aspect of the invention is illustrated in the process diagram of Fig. 18. As an alternative to the use of a planar hot wire cutter to form a straight-line or planar cut, as shown in Figs. 9 and 10, the method may comprise a process wherein a flexible cutting device is reshaped to provide a non-planar cutting profile. The reshaping may be performed based on the desired cut geometry, to ensure that the end product accurately corresponds to the desired equipment profile.

In step 200, a desired element geometry is provided, which may define the profile shape of, for example, a wind turbine blade mould surface or a wind turbine blade mould plug geometry. Such a geometry may be received by a suitable controller for the equipment manufacturing process, and may be provided from any suitable system, for example as a result of the equipment design process, and/or through appropriate scanning and mapping of an existing equipment profile.

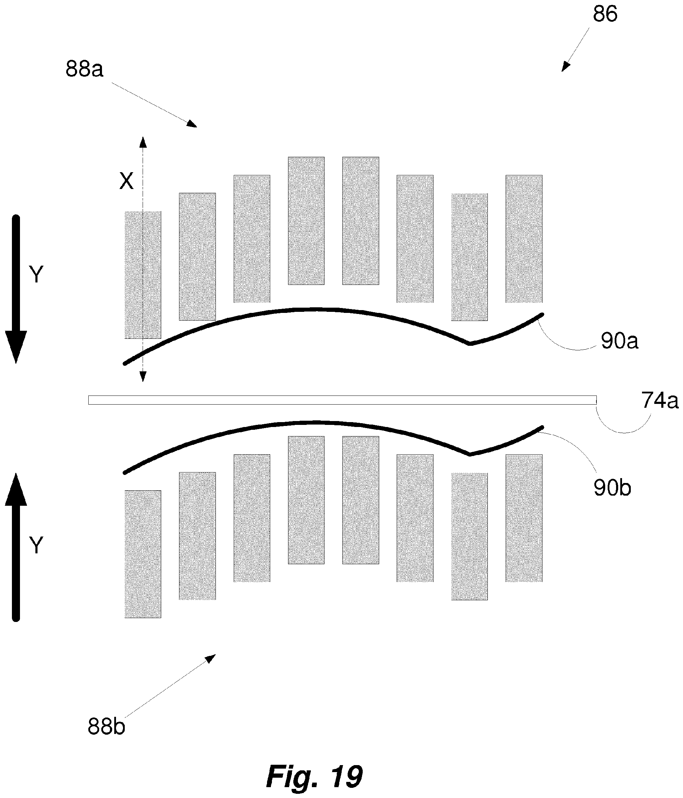

With reference to Fig. 19, a reshaping apparatus is indicated at 86. The reshaping apparatus 86 comprises upper and lower arrays of linear actuators 88a,88b. The actuator arrays 88a,88b are arranged in parallel series, and are moveably along parallel axes, e.g. along the horizontal axis indicated at X in Fig. 19. A first flexible membrane 90a is provided adjacent the lower side of the upper array of actuators 88a and a second flexible membrane 90b is provided adjacent the upper side of the lower array of actuators 88b. The flexible membranes 90a,90b may be loosely connected to the actuators, or simply held in position adjacent the respective sides of the arrays 88a,88b.

Through appropriate adjustment of the position of the actuators in the arrays 88a,88b, the respective flexible membranes 90a,90b may be deformed to assume a profile shape. Such adjustment is performed based on the desired element geometry of the wind turbine blade mould or mould plug, at step 202. As a result, the shaped flexible membranes 90a,90b form a pair of opposed bearing or clamping surfaces for the re-shaping of a flexible cutting device. It will be understood that the actuator arrays 88a,88b are preferably adjusted to form complementarily-shaped bearing surfaces of the reshaping apparatus 86. While the apparatus 86 shown utilises a pair of opposed bearing surfaces, in an alternative configuration the apparatus may be provided with a single adjustable bearing surface, wherein a flexible cutting device may be applied against the single surface and/or the single surface may be pressed against the cutting device.

The actuator arrays 88a,88b and the respective flexible membranes 90a,90b are provided as separate sub-assemblies of the reshaping apparatus 86, such that the upper array 88a and membrane 90a may be moved relative to the lower array 88b and membrane 90b, preferably in a clamping action, following the arrows indicated at Y in Fig. 19.

In step 204, a flexible cutting device in the form of a hot wire cutter 74a is positioned between the opposed shaped flexible membranes 90a,90b. It will be understood that a receiving channel may be provided in the surface of at least one of the flexible membranes 90a,90b, to provide for accurate positioning of the wire between the opposed surfaces. While Fig. 19 illustrates the reshaping of a wire cutter device, it will be understood that alternative types of cutting devices may be shaped in the apparatus.

In step 206, the opposed clamping surfaces are brought together in a clamping action, as indicated by the arrows Y in Fig. 19. The action of clamping the surfaces defined by the flexible membranes 90a,90b against the wire cutter 74a acts to reshape and deform the wire cutter 74a to assume the profile defined by the flexible membranes 90a,90b and the adjusted actuators 88a,88b. The clamping surfaces are applied against the wire cutter 74a for a time period and a clamping pressure suitable to ensure that the wire cutter 74a will retain the profile of the clamping surfaces. The clamping surfaces are then opened, step 208, and the reshaped wire cutter removed from the apparatus 86.

The reshaped wire cutter may then be used in the manufacturing method as shown in Figs. 9 and 10 to provide for cut mould elements having a relatively complex or curved cut profile geometry. The ability to reshape the wire cutter to form mould elements with curved surfaces means that the provision of the mould geometry into separate geometrical slices is not as limited compared to the method utilising substantially flat planar cut surfaces with limited tolerance ranges. Accordingly, the mould geometry can be recreated using a smaller number of relatively larger slices, thereby reducing the number of different mould blank elements which are required, and the number of boundaries between adjacent mould elements which may require smoothing, etc.

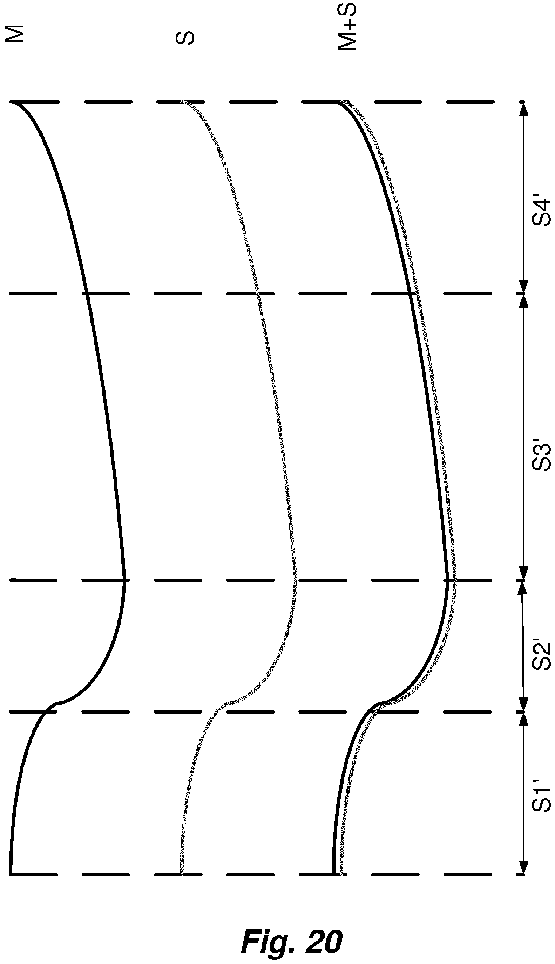

An example of the advantages presented by the use of the reshaped wire cutter is illustrated in Fig. 20, wherein a cross-sectional profile taken along the longitudinal or spanwise axis of a mould geometry 70 is shown. The mould geometry 70 is illustrated at the plot M, the segments are indicated at the plot S showing the substantially planar or straight-line spanwise projection of the segments, with the mould geometry and the segments superimposed in the plot M+S.

By contrast to the cross-sectional profile of Fig. 8, the use of a reshaped wire cutter to have a curved cutting profile in the chordwise direction allows for the relatively complex curvature of the mould geometry to be accommodated by spanwise segments S1'-S4', resulting in a reduced number of separate spanwise segments and associated mould blank elements required for construction and assembly.

It will be understood that while features of the above embodiments are described in the context of the manufacture of a wind turbine blade mould, the features of the embodiments may equally apply to the manufacture of a wind turbine blade mould plug, which can be understood as a negative of a blade mould, used for the manufacture of wind turbine blade moulds. The plug may be an exact representation of the shape of a wind turbine blade shell to be manufactured in such a blade mould.

The use of a manufacturing method according to the invention for such wind turbine blade process equipment provides for a low-cost, high-speed manufacturing method, which allows for a flexible and efficient start-up process for a new manufacturing facility production line.

The invention is not limited to the embodiments described herein, and may be modified or adapted without departing from the scope of the present invention.

## Claims

1. A method of manufacturing a mould for a wind turbine blade shell, wherein the method comprises the steps of:
providing a wind turbine blade mould geometry;
dividing said wind turbine blade mould geometry into a plurality of separate geometrical slices;
providing a plurality of mould blank elements, wherein said plurality of mould blank elements corresponds with said plurality of separate geometrical slices;
cutting said plurality of mould blank elements to form a plurality of cut mould elements having cut surfaces, wherein said cutting is based on said plurality of separate geometrical slices; and
assembling said plurality of cut mould elements, wherein the cut surfaces of said cut mould elements substantially form a consolidated wind turbine blade mould surface, **characterised in that**
said mould blank elements are formed from a low-weight material, preferably a foam material, and wherein
the method further comprises the step of applying a coating to said plurality of cut surfaces.

2. The method of claim 1, wherein the foam material is polystyrene or expanded polystyrene (EPS).

3. The method of claim 1 or 2, wherein said step of applying a coating comprises applying an elastomer coating, preferably a polyurea coating.

4. The method of any one of claims 1-3, wherein said step of cutting is performed using a cutting member, preferably a hot-wire cutting member.

5. The method of any one of claims 1-4, wherein the method further comprises the steps of smoothing said consolidated wind turbine blade mould surface.

6. The method of any one of claims 1-5, wherein the mould blank elements comprise a plane lower surface, and an upper surface corresponding to a part of the consolidated wind turbine blade mould surface.

7. The method of any preceding claim, wherein said step of dividing said wind turbine blade mould geometry comprises dividing said geometry into a plurality of spanwise and/or chordwise segments.

8. The method of any preceding claim, wherein said step of dividing comprises:
approximating a curved surface profile of said wind turbine blade mould geometry into a plurality of spanwise surface sections, said plurality of spanwise surface sections arranged in series along the spanwise direction of said wind turbine blade mould geometry.

9. The method of claim 8, wherein at least some of said plurality of spanwise surface sections comprise a substantially straight-line profile shape in the spanwise direction of the spanwise surface sections.

10. The method of claim 8 or claim 9, wherein at least one of said plurality of spanwise surface sections comprises a degree of twist around a spanwise or a chordwise axis.

11. The method of any preceding claim, wherein the method further comprises the steps of:
providing a flexible cutting device, wherein said step of cutting is performed using said flexible cutting device based on said plurality of separate geometrical slices; and
reshaping said flexible cutting device based on said plurality of separate geometrical slices, such that said flexible cutting device is arranged to cut said plurality of mould blank elements according to the shape of said separate geometrical slices.

12. A mould for manufacturing a wind turbine blade shell, wherein
the mould wind turbine blade mould geometry, which is divided into a plurality of separate geometrical slices; and wherein
the mould is assembled from a plurality of mould blank elements, wherein said plurality of mould blank elements having cut surface which correspond with said plurality of separate geometrical slices; and wherein
said plurality of cut mould elements are assembled to substantially form a consolidated wind turbine blade mould surface, **characterised in that**
said mould blank elements are formed from a low-weight material, preferably a foam material, and wherein
a coating is applied to said plurality of cut surfaces.

13. The use of a mould for a wind turbine blade shell as claimed in claim 12for the manufacture of a wind turbine blade shell.

14. A method of manufacturing a mould plug for the manufacture of a mould for a wind turbine blade shell, wherein the method comprises the steps of:
providing a wind turbine blade mould plug geometry;
dividing said wind turbine blade mould plug geometry into a plurality of separate geometrical slices;
providing a plurality of plug blank elements, wherein said plurality of plug blank elements corresponds with said plurality of separate geometrical slices;
cutting said plurality of plug blank elements to form a plurality of cut plug elements having cut surfaces, wherein said cutting is based on said plurality of separate geometrical slices; and
assembling said plurality of cut plug elements, wherein the cut surfaces of said cut plug elements substantially form a consolidated wind turbine blade mould plug surface, wherein
said plug blank elements are formed from a low-weight material, preferably a foam material, and
the method further comprises the step of applying a coating to said plurality of cut surfaces.

15. A mould plug for the manufacture of a mould for a wind turbine blade shell manufactured according to claim 14.

## Patentansprüche

1. Verfahren zum Herstellen eines Formwerkzeugs für eine Windkraftanlagenflügelschale, wobei das Verfahren folgende Schritte umfasst:
Bereitstellen einer Windkraftanlagenflügel-Formwerkzeuggeometrie;
Teilen der Windkraftanlagenflügel-Formwerkzeuggeometrie in eine Vielzahl von einzelnen geometrischen Scheiben;
Bereitstellen einer Vielzahl von Formwerkzeug-Rohlingselementen, wobei die Vielzahl von Formerkzeug-Rohlingselementen der Vielzahl von einzelnen geometrischen Scheiben entspricht;
Zuschneiden der Vielzahl von Formwerkzeug-Rohlingselementen, um eine Vielzahl von zugeschnittenen Formwerkzeugelementen mit zugeschnittenen Oberflächen zu bilden, wobei das Zuschneiden auf der Vielzahl von einzelnen geometrischen Scheiben basiert; und
Zusammensetzen der Vielzahl von zugeschnittenen Formwerkzeugelementen, wobei die zugeschnittenen Oberflächen der zugeschnittenen Formwerkzeugelemente im Wesentlichen eine vereinigte Windkraftanlagenflügel-Formwerkzeugoberfläche bilden, **dadurch gekennzeichnet, dass**
die Formwerkzeug-Rohlingselemente aus einem Leichtbauwerkstoff, vorzugsweise einem Schaumstoff, gebildet werden, und wobei
das Verfahren weiter den Schritt des Auftragens einer Beschichtung auf die Vielzahl von zugeschnittenen Oberflächen umfasst.

2. Verfahren nach Anspruch 1, wobei es sich bei dem Schaumstoff um Polystyrol oder expandiertes Polystyrol (EPS) handelt.

3. Verfahren nach Anspruch 1 oder 2, wobei der Schritt des Auftragens einer Beschichtung das Auftragen einer Elastomerbeschichtung, vorzugsweise einer Polyhamstoffbeschichtung umfasst.

4. Verfahren nach einem der Ansprüche 1-3, wobei der Schritt des Zuschneidens unter Verwendung eines Zuschneideglieds, vorzugsweise eines Heißdraht-Zuschneideglieds, ausgeführt wird.

5. Verfahren nach einem der Ansprüche 1-4, wobei das Verfahren weiter die Schritte des Glättens der vereinigten Windkraftanlagenflügel-Formwerkzeugoberfläche umfasst.

6. Verfahren nach einem der Ansprüche 1-5, wobei die Formwerkzeug-Rohlingselemente eine ebene untere Oberfläche und eine einem Teil der vereinigten Windkraftanlagenflügel-Formwerkzeugoberfläche entsprechende obere Oberfläche umfassen.

7. Verfahren nach einem der vorangehenden Ansprüche, wobei der Schritt des Teilens der Windkraftanlagenflügel-Formwerkzeuggeometrie das Teilen der Geometrie in eine Vielzahl von Spannweiten- und/oder Sehnensegmenten umfasst.

8. Verfahren nach einem der vorangehenden Ansprüche, wobei der Schritt des Teilens Folgendes umfasst:
Annähern eines gekrümmten Oberflächenprofils der Windkraftanlagenflügel-Formwerkzeuggeometrie zu einer Vielzahl von Spannweiten-Oberflächenabschnitten,
wobei die Vielzahl von Spannweiten-Oberflächenabschnitten hintereinander entlang der Spannweitenrichtung der Windkraftanlagenflügel-Formwerkzeuggeometrie angeordnet sind.

9. Verfahren nach Anspruch 8, wobei mindestens einige der Vielzahl von Spannweiten-Oberflächenabschnitten in der Spannweitenrichtung der Spannweiten-Oberflächenabschnitte eine im Wesentlichen geradlinige Profilform umfassen.

10. Verfahren nach Anspruch 8 oder Anspruch 9, wobei mindestens einer der Vielzahl von Spannweiten-Oberflächenabschnitten einen Grad an Verdrehung um eine in Spannweiten- oder Sehnenrichtung verlaufende Achse umfasst.

11. Verfahren nach einem der vorangehenden Ansprüche, wobei das Verfahren ferner folgende Schritte umfasst:
Bereitstellen einer biegsamen Zuschneidevorrichtung, wobei der Schritt des Zuschneidens unter Verwendung der biegsamen Zuschneidevorrichtung basierend auf der Vielzahl von einzelnen geometrischen Scheiben ausgeführt wird; und
Umformen der biegsamen Zuschneidevorrichtung basierend auf der Vielzahl von einzelnen geometrischen Scheiben, sodass die biegsame Zuschneidevorrichtung dazu angeordnet wird, die Vielzahl von Formerkzeug-Rohlingselementen gemäß der Form der einzelnen geometrischen Scheiben zuzuschneiden.

12. Formwerkzeug zum Herstellen einer Windkraftanlagenflügelschale, wobei
das Formwerkzeug Windkraftanlagenflügel-Formwerkzeuggeometrie in eine Vielzahl von einzelnen geometrischen Scheiben geteilt ist; und wobei
das Formwerkzeug aus einer Vielzahl von Formerkzeug-Rohlingselementen zusammengesetzt ist, wobei die Vielzahl von Formerkzeug-Rohlingselementen mit zugeschnittenen Oberflächen der Vielzahl von einzelnen geometrischen Scheiben entspricht; und wobei
die Vielzahl von zugeschnittenen Formwerkzeugelementen zusammengesetzt sind, um im Wesentlichen eine vereinigte Windkraftanlagenflügel-Formwerkzeugoberfläche zu bilden, **dadurch gekennzeichnet, dass**
die Formwerkzeug-Rohlingselemente aus einem Leichtbauwerkstoff, vorzugsweise einem Schaumstoff, gebildet werden, und wobei
eine Beschichtung auf die Vielzahl von zugeschnittenen Oberflächen aufgetragen ist.

13. Verwendung eines Formwerkzeugs für eine Windkraftanlagenflügelschale nach Anspruch 12 für die Herstellung einer Windkraftanlagenflügelschale.

14. Verfahren zum Herstellen eines Formwerkzeugkerns für die Herstellung eines Formwerkzeugs für eine Windkraftanlagenflügelschale, wobei das Verfahren folgende Schritte umfasst:
Bereitstellen einer Windkraftanlagenflügel-Formwerkzeugkerngeometrie;
Teilen der Windkraftanlagenflügel-Formwerkzeugkerngeometrie in eine Vielzahl von einzelnen geometrischen Scheiben;
Bereitstellen einer Vielzahl von Kernrohlingselementen, wobei die Vielzahl von Kernrohlingselementen der Vielzahl von einzelnen geometrischen Scheiben entspricht;
Zuschneiden der Vielzahl von Kernrohlingselementen, um eine Vielzahl von zugeschnittenen Kernelementen mit zugeschnittenen Oberflächen zu bilden, wobei das Zuschneiden auf der Vielzahl von einzelnen geometrischen Scheiben basiert; und
Zusammensetzten der Vielzahl von zugeschnittenen Kernelementen, wobei die zugeschnittenen Oberflächen der zugeschnittenen Kernelemente im Wesentlichen eine vereinigte Windkraftanlagenflügel-Formwerkzeugkernoberfläche bilden, wobei
die Kernrohlingselemente aus einem Leichtbauwerkstoff, vorzugsweise einem Schaumstoff, gebildet werden, und
das Verfahren weiter den Schritt des Auftragens einer Beschichtung auf die Vielzahl von zugeschnittenen Oberflächen umfasst.

15. Formwerkzeugkern zum Herstellen eines Formwerkzeugs für eine Windkraftanlagenflügelschale, der gemäß Anspruch 14 hergestellt ist.

## Revendications

1. Procédé de fabrication d'un moule pour une coque de pale d'éolienne, dans lequel le procédé comporte les étapes consistant à :
mettre en oeuvre une géométrie de moule de pale d'éolienne ;
diviser ladite géométrie de moule de pale d'éolienne en une pluralité de tranches géométriques séparées ;
mettre en oeuvre une pluralité d'éléments d'ébauche de moule, dans lequel ladite pluralité d'éléments d'ébauche de moule correspond à ladite pluralité de tranches géométriques séparées ;
découper ladite pluralité d'éléments d'ébauche de moule pour former une pluralité d'éléments de moule découpés ayant des surfaces découpées, dans lequel ladite étape consistant à découper est basée sur ladite pluralité de tranches géométriques séparées ; et
assembler ladite pluralité d'éléments de moule découpés, dans lequel les surfaces découpées desdits éléments de moule découpés forment sensiblement une surface de moule de pale d'éolienne consolidée, **caractérisé en ce que**
lesdits éléments d'ébauche de moule sont formés à partir d'un matériau de faible poids, de préférence un matériau alvéolaire, et dans lequel
le procédé comporte par ailleurs l'étape consistant à appliquer un revêtement sur ladite pluralité de surfaces découpées.

2. Procédé selon la revendication 1, dans lequel le matériau alvéolaire est du polystyrène ou du polystyrène expansé (PSE).

3. Procédé selon la revendication 1 ou la revendication 2, dans lequel ladite étape consistant à appliquer un revêtement comporte l'étape consistant à appliquer un revêtement d'élastomère, de préférence un revêtement de polyurée.

4. Procédé selon l'une quelconque des revendications 1 à 3, dans lequel ladite étape consistant à découper est effectuée en utilisant un élément de découpe, de préférence un élément de découpe au fil chaud.

5. Procédé selon l'une quelconque des revendications 1 à 4, dans lequel le procédé comporte par ailleurs les étapes consistant à lisser ladite surface de moule de pale d'éolienne consolidée.

6. Procédé selon l'une quelconque des revendications 1 à 5, dans lequel les éléments d'ébauche de moule comportent une surface inférieure plane, et une surface supérieure correspondant à une partie de la surface de moule de pale d'éolienne consolidée.

7. Procédé selon l'une quelconque des revendications précédentes, dans lequel ladite étape consistant à diviser ladite géométrie de moule de pale d'éolienne comporte l'étape consistant à diviser ladite géométrie en une pluralité de segments allant dans le sens de l'envergure et/ou allant dans le sens de la corde.

8. Procédé selon l'une quelconque des revendications précédentes, dans lequel ladite étape consistant à diviser comporte :
l'étape consistant à rapprocher par approximation un profil de surface courbe de ladite géométrie de moule de pale d'éolienne en une pluralité de sections de surface allant dans le sens de l'envergure, ladite pluralité de sections de surface allant dans le sens de l'envergure étant agencée en série le long de la direction allant dans le sens de l'envergure de ladite géométrie de moule de pale d'éolienne.

9. Procédé selon la revendication 8, dans lequel au moins certaines de ladite pluralité de sections de surface allant dans le sens de l'envergure comportent une forme de profil sensiblement en ligne droite dans la direction allant dans le sens de l'envergure des sections de surface allant dans le sens de l'envergure.

10. Procédé selon la revendication 8 ou la revendication 9, dans lequel au moins l'une de ladite pluralité de sections de surface allant dans le sens de l'envergure comporte un degré de torsion autour d'un axe allant dans le sens de l'envergure ou d'un axe allant dans le sens de la corde.

11. Procédé selon l'une quelconque des revendications précédentes, dans lequel le procédé comporte par ailleurs les étapes consistant à :
mettre en oeuvre un dispositif de découpe flexible, dans lequel ladite étape consistant à découper est effectuée en utilisant ledit dispositif de découpe flexible en fonction de ladite pluralité de tranches géométriques séparées ; et
redonner la forme dudit dispositif de découpe flexible en fonction de ladite pluralité de tranches géométriques séparées, de telle sorte que ledit dispositif de découpe flexible est agencé pour découper ladite pluralité d'éléments d'ébauche de moule en fonction de la forme desdites tranches géométriques séparées.

12. Moule servant à fabriquer une coque de pale d'éolienne, dans lequel
la géométrie de moule de pale d'éolienne en moule est divisée en une pluralité de tranches géométriques séparées ; et dans lequel
le moule est assemblé à partir d'une pluralité d'éléments d'ébauche de moule, dans lequel ladite pluralité d'éléments d'ébauche de moule ayant une surface découpée correspond à ladite pluralité de tranches géométriques séparées ; et dans lequel
les éléments de ladite pluralité d'éléments de moule découpés sont assemblés pour former sensiblement une surface de moule de pale d'éolienne consolidée, **caractérisé en ce que**
lesdits éléments d'ébauche de moule sont formés à partir d'un matériau de faible poids, de préférence un matériau alvéolaire, et dans lequel
un revêtement est appliqué sur ladite pluralité de surfaces découpées.

13. Utilisation d'un moule pour une coque de pale d'éolienne selon la revendication 12 pour la fabrication d'une coque de pale d'éolienne.

14. Procédé de fabrication d'un bouchon d'obturation de moule pour la fabrication d'un moule pour une coque de pale d'éolienne, dans lequel le procédé comporte les étapes consistant à :
mettre en oeuvre une géométrie de bouchon d'obturation de moule de pale d'éolienne ;
diviser ladite géométrie de bouchon d'obturation de moule de pale d'éolienne en une pluralité de tranches géométriques séparées ;
mettre en oeuvre une pluralité d'éléments d'ébauche de bouchon d'obturation, dans lequel ladite pluralité d'éléments d'ébauche de bouchon d'obturation correspond à ladite pluralité de tranches géométriques séparées ;
découper ladite pluralité d'éléments d'ébauche de bouchon d'obturation pour former une pluralité d'éléments de bouchon d'obturation découpés ayant des surfaces découpées, dans lequel ladite étape consistant à découper est basée sur ladite pluralité de tranches géométriques séparées ; et
assembler ladite pluralité d'éléments de bouchon d'obturation découpés, dans lequel les surfaces découpées desdits éléments de bouchon d'obturation découpés forment sensiblement une surface de bouchon d'obturation de moule de pale d'éolienne consolidée, dans lequel
lesdits éléments d'ébauche de bouchon d'obturation sont formés à partir d'un matériau de faible poids, de préférence un matériau alvéolaire, et
le procédé comporte par ailleurs l'étape consistant à appliquer un revêtement sur ladite pluralité de surfaces découpées.

15. Bouchon d'obturation de moule pour la fabrication d'un moule pour une coque de pale d'éolienne fabriqué selon la revendication 14.
